# EUROPEAN PATENT APPLICATION

(11) **EP 4 640 117 A1**
(43) Date of publication of application: **29.10.2025**
(21) Application number: 25171096.8
(22) Date of filing: 16.04.2025
(51) Int. Cl.: A47J 31/30

(54) **DEVICE FOR PREPARING COFFEE OR OTHER BEVERAGES**

(30) Priority: 24.04.2024 IT 202400009469
(71) Applicant: Previati, Simone, 40062 Molinella (BO) (IT); Cevenini, Stefano, 40139 Bologna (BO) (IT)
(72) Inventor: Previati, Simone, 40062 Molinella (BO) (IT); Cevenini, Stefano, 40139 Bologna (BO) (IT)
(74) Representative: Negrini, Elena

(57) **Abstract**

A device for preparing coffee or other beverages comprises:
- a tank (3) for at least a predetermined quantity of water (W) having an upper opening (4);
- a duct (5) for the water (W), having a draft end (6) and having at an opposite end a permeable container element (7) assigned to house an essence (E) for the beverage;
- a container (11) for the beverage having a bottom (13) reversibly constrained to the tank (3).

In an assembled condition (Z) of the device (1), the draft end (6) of the duct (5) draws into the tank (3), the container element (7) engages the upper opening (4), and the container (11) is constrained to the tank (3).

The bottom (13) of the container (11) has a lower opening (17) which in the assembled condition (Z) faces the container element (7) from above and places the container (11) in flow communication with the container element (7) by interposing a valve element (20) assigned to allow a flow of the beverage only in the direction from the container element (7) to the container (11).

## Description

The present invention falls within the sector concerning the preparation of beverages and in particular refers to a device for the preparation of coffee or other hot beverages.

Devices for the preparation of coffee or other beverages, of the so-called "moka" type, are known, comprising a boiler or tank for the water to be heated, a container for the prepared beverage, a vertical dispensing duct, and a container element or so-called "filter" placed along the dispensing duct and assigned to contain the essence that gives the flavor to the beverage, for example ground coffee, tea leaves, dried flowers, soluble preparation for powdered beverages, and the like. The dispensing duct draws from the boiler and flows into the container through an outlet located at the top of a chimney at a higher level than the bottom of the container itself.

In known devices, the water in the boiler is heated as a result of the heating of the walls of the boiler itself, and in particular of the bottom of the latter, by means of an external heat source, such as a gas or induction stove. As the temperature increases, the pressure of the gases in the boiler also increases; when a predetermined operating temperature is reached, the pressure in the boiler is such that it can force the water through the dispensing duct and the filter; as it passes through the essence contained in the filter, the water extracts or dissolves the substances that characterize the beverage. The beverage thus obtained is collected in the container below the level of the dispensing duct outlet.

A disadvantage of the known devices is that the operating temperature at which a sufficient pressure is reached to force the water to rise up the dispensing duct is generally higher than the optimal temperature for extracting the essence, to the detriment of the organoleptic characteristics of the beverage.

Another disadvantage of the known devices is that the hot dispensing duct can induce unwanted changes in the organoleptic characteristics of the beverage that rises up it.

A further disadvantage of the known devices is that the dispensed beverage is deposited in the container in a non-uniform but stratified manner, where the portion extracted first and therefore more intense and rich in water-soluble substances extracted from the essence is deposited on the bottom of the container, and where the portions extracted later, gradually more diluted and less intense, are collected towards the surface.

An object of the present invention is to propose a device for preparing coffee or other beverages in which the time during which the beverage remains in contact with hot metal parts of the device, in particular with the dispensing duct, is reduced to a minimum and thus retains its organoleptic characteristics.

Another object of the present invention is to propose a device that allows the water to exit the boiler, pass through the filter and reach the container even at an operating temperature equal to or close to the optimal extraction temperature of each beverage to be prepared.

A further object of the present invention is to propose a device thanks to which the produced beverage is collected in a non-layered, but uniform or homogeneous manner.

The characteristics of the invention are highlighted below with particular reference to the attached drawings in which:
- figure 1 illustrates a top view of the device for preparing coffee or other beverages which are the subject of the present invention, in which some parts have been removed to better highlight others;
- figure 2 illustrates a front view in section along the II-II plane of the device of figure 1.

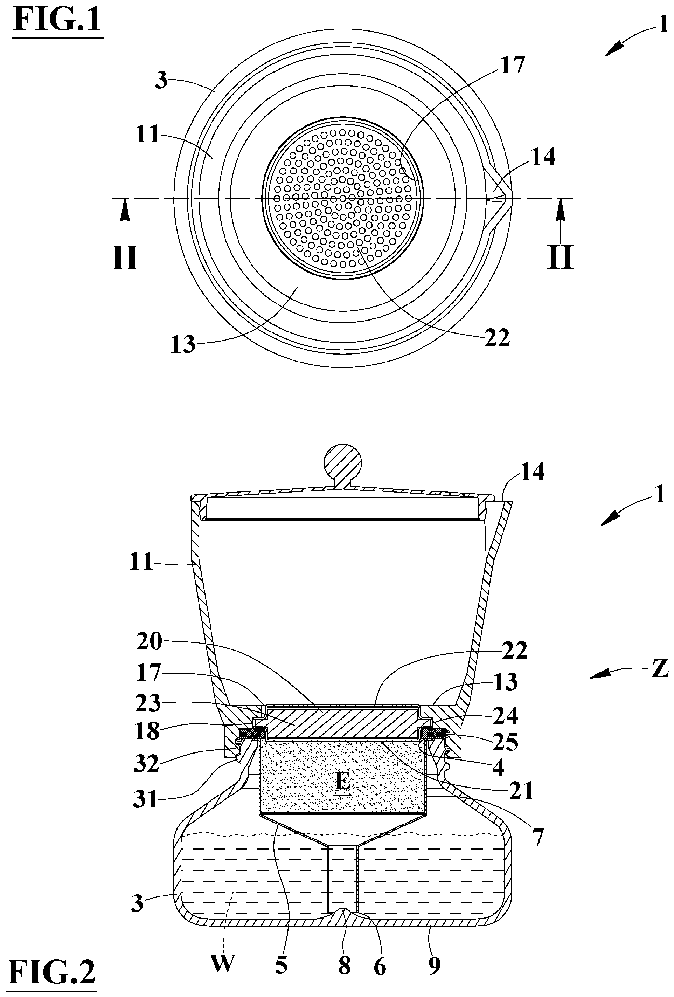

With reference to figures 1 and 2, numeral 1 indicates the device for preparing coffee or other beverages which is the object of the present invention, which in its preferred embodiment comprises:
- a hollow tank 3 having a base 9 and an opposite upper opening 4 and assigned to house at least a predetermined quantity of water W;
- a longitudinally developed duct 5 for the water W, having a draft end 6 and having at an opposite end a permeable container element 7 assigned to host or contain an essence E which, passed through by the water W, provides by percolation, dissolution or infusion the aromas and other organoleptic characteristics to the water W itself to obtain the beverage, and which is therefore selectable depending on the predetermined beverage to be prepared;
- a container 11 for the prepared beverage, provided with at least one dispensing outlet 14, and having a bottom 13 having a lower opening 17 and in the correspondence of which it is reversibly constrained or lockable to the tank 3;
- a valve element 20 of the unidirectional or non-return type.

The tank 3, or so-called boiler, is a container of cylindrical, prismatic, truncated cone or pyramid shape, or similar shape preferably with axial symmetry, and is made of a waterproof and heat-resistant material such as aluminium, steel, copper, metal alloys or glass. The dimensions of the tank 3 are such that it can contain inside it at least said predetermined quantity of water W, i.e. water W in a quantity or volume sufficient for the preparation of at least one portion of a predetermined beverage, preferably also of several portions. The upper opening 4 is preferably circular and allows the insertion of the water W. The base 9 also acts as a heating element: in correspondence with a condition of use of the device 1, the water W in the tank 3 is heated by applying heat to the base 9, or more generally to the tank 3, by means of a flame, resistance or induction burner, or by other heating methods. The size, shape and material of the tank 3 make the latter capable of withstanding high pressures, up to for example 15 bar, and high temperatures, up to for example 100 °C or more, without deforming, cracking, melting or releasing substances into the water W contained therein.

The duct 5 is of the funnel type, where the portion comprising the draft end 6 is a tube with a narrower section and widens towards the portion comprising the container element 7, which preferably has a wider cylindrical shape with a diameter equal to or slightly smaller than that of the upper opening 4 of the tank 3. The two said portions are separated by a filter or perforated wall, while the opposite end of the container element 7 is open, so that the essence E can be inserted into the container element 7 without however insinuating itself into the duct 5 towards the draft end 6. In the condition of use, the heated water W that from the tank 3 enters the draft end 6 of the duct 5 passes through the essence E extracting its aromas, and exits the container element 7 in the shape of the desired prepared beverage.

The container 11 is preferably made of the same material as the tank 3 and with an axially symmetrical shape. The lower opening 17 passes through the bottom 13 and is preferably circular with a diameter equal to or slightly greater or less than the diameter of the container element 7. The dispensing outlet 14 is an opening obtained above the maximum level that the beverage can reach in the container 11, and is provided for example with a nozzle or spout that facilitates the pouring of the beverage from the device 1 into another container for its enjoyment, such as a cup, a glass or other.

In correspondence with an assembled condition Z of the device 1, the duct 5 is at least partially inserted into the tank 3 with the draft end 6 that draws into the tank 3 itself in proximity to the base 9 of the latter, and with the container element 7 that engages, occupies or occludes the upper opening 4, and the container 11 is constrained or blocked to the tank 3 with the lower opening 17 facing from above and connected to the opening of the container element 7 so as to place the container 11 in flow communication with the container element 7 itself. An edge or shelf protruding radially outside the open end of the container element 7 rests on the extreme edge of the upper opening 4 of the tank 3, which is possibly provided with a specific circular seat so that this extreme edge of the tank 3 and the open end of the container element 7 are mutually almost coplanar. The valve element 20 is positioned at, i.e. near or in proximity to, the lower opening 17 of the container 11, aligned with it, and is therefore interposed between the container 11 itself and the container element 7, thus allowing a flow of the prepared beverage only in the direction from the container element 7 to the container 11, and preventing the unwanted return of the beverage from the container 11 to the duct 5 and to the tank 3.

More specifically, the valve element 20 comprises a lower shell or cap 21 and an upper shell or cap 22 of the filter type, i.e. the surface of which has a plurality of holes or passages, with a diameter preferably between 0.1-1.5 mm, more preferably between 0.2-0.9 mm, more preferably approximately 0.8 mm, and in any case such as to allow the passage of the beverage and at the same time maintain all or most of the essence E (such as for example coffee powder or tea leaves) confined in the upstream container element 7.

The lower cap 21 and the upper cap 22 preferably have the shape of concave discs, for example slightly rounded or flat and with edges protruding towards each other, with the concavity of one facing the concavity of the other, and are delimited by respective perimeter edges which are in mutual contact or in any case axially aligned. In the assembled condition Z the lower cap 21 faces the container element 7 and the upper cap 22 faces the container 11.

In the volume between the lower caps 21 and upper caps 22 a membrane element 23 with unidirectional flow is interposed, i.e. permeable to a flow of fluids, and in particular to the liquid beverage, only in a predetermined direction and in certain conditions specified below.

The membrane element 23 is preferably of a thin disc shape whose perimeter is clamped between the perimeter edges of the lower cap 21 and the upper cap 22 in correspondence with, i.e. along, a circular edge 24 of the valve element 20.

The membrane element 23 is made of elastic material such as silicone or rubber, and is preferably provided with a plurality of pores, distributed more or less uniformly along at least a central portion of the membrane element 23 itself, which pass through its thickness and which have a cusp profile, i.e. protruding from the same side of the membrane element 23.

The cusps of the pores protrude and are oriented towards the upper cap 22 and, due to their shape and the elasticity of the material, are normally closed and therefore impenetrable to fluids and in particular to the beverage. In correspondence with the condition of use of the device 1, when the water W in the tank 3 and therefore the beverage in the container element 7 upstream of the membrane element 23 itself reaches pressures greater than a predetermined limit or threshold pressure, the beverage pushes on the face of the membrane element 23 facing the lower cap 21, causing an expansion of the membrane element 23 itself in the direction of the upper cap 22 and a consequent elastic opening of the edges of said pores with a cusp profile, which therefore allow the passage of the beverage from the container element 7 through the valve element 20 into the container 11. When the pressure of the beverage in the container element 7 drops below the predetermined limit pressure, the edges of the pores with a cusp profile elastically return to the normal closed position, preventing a reflux of the beverage from the container 11 backwards towards the container element 7.

The valve element 20 is preferably of the disassemblable and reassemblable type, so as to advantageously allow cleaning and/or replacement of the membrane element 23 and the lower 21 and upper 22 caps. For example, the perimeter edge of the lower cap 21 may reversibly snap or interfere within a frame (not shown) of the perimeter edge of the upper cap 22, or vice versa, with the perimeter of the membrane element 23 pressed between said perimeter edges.

Alternatively, a variant of the valve element 20 provides that the lower cap 21 and the upper cap are mutually irreversibly constrained at the circular edge 24, the perimeter edges of each cap being welded or mechanically joined along the circular edge 24, for example by clinching, again with the perimeter of the membrane element 23 pressed between said perimeter edges. This solution may be advantageous, for example, to maximize the tightening of the membrane element 23 and prevent it from moving freely in the volume between the lower caps 21 and upper caps 22.

Preferably, the container 11 has a seat 18, such as for example a circular track or shelf, obtained in proximity to the lower opening 17 or in correspondence with the edge of the latter, in which the circular edge 24 of the valve element 20 is reversibly lockable at least in the assembled condition Z of the device 1. This lock is made by snapping, interference, screwing, magnetically, or in another similar way. In the assembled condition Z, therefore, the valve element 20 is almost coplanar with the lower opening 17 of the container 11, and completely occupies the lower opening 17, so that the flow of the beverage from the container element 7 to the container 11 must necessarily and exclusively pass through the valve element 20 itself. The valve element 20 can however be removed from the connection with the container 11 for normal cleaning operations of the device 1.

To ensure that the flow connection mediated by the valve element 20 is hermetically sealed, the device 1 preferably comprises a ring gasket 25 which, at least in the assembled condition Z, is associated with the circular edge 24 of the valve element 20 and/or with the seat 18 to fluid-tightly constrain the connection between the lower opening 17 of the container 11 and the container element 7, so as to prevent even a minimal part of the beverage from flowing around the circular edge 24 of the valve element 20 and not through the holes in the caps and the membrane element 23 thereof. Preferably, the gasket 25 also provides a liquid seal between the circular edge 24.

The tank 3 and the container 11 have corresponding coupling means 31, 32 in correspondence with, i.e. near or in proximity to, the upper opening 4 and the lower opening 17, respectively, assigned for mutual constraint or reversible or removable locking in the assembled condition Z.

Such coupling means 31, 32 are for example bayonet or of another type, for example and preferably screw 31 and nut 32, where the screw 31 is obtained at the upper end of the tank 3 and in the assembled condition Z keeps the gasket 25 pressed against the circular edge 24 of the valve element 20 and against the nut 32 obtained in correspondence with the lower opening 17 of the container 11.

Preferably, the base 9 of the tank 3 has internally a protrusion 8 aligned with the axis of symmetry of the tank 3 itself, and which therefore in the assembled condition Z is aligned with and slightly below the draft end 6 of the duct 5. This protrusion 8 is preferably a protrusion of conical, cusp-shaped, or other shape protruding upwards and with axial symmetry, with its upper end very close to the entrance of the draft end 6 or partially inserted with the upper end, however leaving a passage for the water W. The protrusion 8 thus shaped directs the flow of water W towards the draft end 6 and forms a constriction between itself and the draft end 6 at the correspondence of which the speed increases and therefore the pressure of the flow of water W decreases; consequently, the protrusion 8 is for example assigned to induce and facilitate the flow of water W from the tank 3 to the duct 5.

More preferably, the protrusion 8 has the shape of a truncated cone with a curved profile connected to the flat bottom of the base 9, where the connection is smooth and without discontinuities or edges in order to make the flow from the tank 3 to the duct 5 as smooth as possible. It has been surprisingly verified that such guiding or directing effect of the flow of water W is more effective for ratios between width or diameter and height of the protrusion 8 included between 10:1-2:1, more preferably between 8:1-5:1, even more preferably of approximately 7:1; a guiding effect may however also be present outside said intervals. The section of the curved profile of the protrusion 8 is preferably in the shape of a circular arc, the radius of which is for example between 1-10 times the height of the protrusion 8, preferably about 2 times, and the angular width of which is for example between 10°-90°, preferably about 45°.

Optionally, the device 1 is provided with a lid for closing the container 11, to maintain the prepared beverage at the desired temperature, and/or with grip means (not illustrated), such as a heat-insulating handle or grip, fixed to the container 11 itself.

In a second embodiment of the device 1 according to the invention, it is envisaged that the membrane element 23 of the valve element 20 is also discoidal and made of elastic material such as rubber or silicone, and has a convex portion, preferably centered, almost in the shape of a spherical cap whose convexity is normally oriented or protruding towards the lower cap 21. The convex portion has a slot, for example in the shape of a cross, which passes through the thickness of the membrane element 23 and whose edges, in the absence of external stresses, are in mutual contact preventing the passage of liquids normally that is in a state of rest. Said slot is normally kept closed with the edges in mutual contact due to its own shape and the elasticity of the material, and therefore does not allow the passage of fluids. In correspondence with the condition of use of the device 1, due to the effect of water W pressures in the container element 7 and of the beverage upstream of the membrane element 23 itself greater than a respective predetermined limit or threshold pressure, the membrane element 23, and in particular its convex portion, reversibly and elastically inverts its convexity which extends towards the upper cap 22, so that the slot opens elastically and the beverage can filter through the valve element 20. When the pressure of the beverage returns below the predetermined limit pressure, the membrane element 23 elastically returns with the concave portion to the normal closed position, preventing a reflux of the beverage from the container 11 to the container element 7.

In this embodiment it is essential that the distance between the lower cap 21 and the upper cap 22 is sufficient so that the membrane element 23 can reach both convexities without impediments.

A variant of the valve element 20 provides that the membrane element 23 is provided with multiple slots, for example two or more parallel linear slots.

The operation of the device 1 provides that when preparing the desired beverage, a user of the device 1 pours a predetermined quantity of water W into the tank 3, then deposits a predetermined quantity of essence E into the container element 7 and inserts the latter into the tank 3, so that the draft end 6 of the duct 5 is submerged and aligned vertically just above the protrusion 8. The valve element 20 is or is already blocked to the container 11, which is screwed to the tank 3 creating the assembled condition Z, with the gasket 25 providing the fluid-tight sealing and with the lower cap 21 of the valve element 20 resting in contact with or located above the essence E; the lower cap 21 also acts as a filter, preventing solid residues of the essence E from insinuating themselves through the cusp holes of the membrane element 23, obstructing them and/or reaching the container 11. In the assembled condition Z, the internal volume of the tank 3 is sealed at the contact between the edge of the open end of the container element 7, the extreme edge of the upper opening 4 of the tank 3 and the gasket 25, therefore the inside of the tank 3 is in flow communication with the outside, and more specifically with the container 11, exclusively through the duct 5 and the subsequent valve element 20. The device 1 is then placed on a stove or other heat source to heat the base 9 and the water W inside it. As the temperature of the water W increases, the vapor pressure inside the tank 3 increases and forces the water W to enter the draft end 6, go up the duct 5, pass through the essence E in the container element 7 becoming beverage, and pass through the lower cap 21 of the valve element 20. From there, when the pressure upstream of the membrane element 23 is sufficiently high (i.e. greater than the limit pressure relative to the particular combination of shape and material of the membrane element 23), the pores or the slot of the membrane element 23 open elastically and allow the beverage to pass or filter into the container 11, where it is deposited above the membrane element 23 and the upper cap 22 as the valve element 20 coincides with the bottom 13 of the container 11, sealing the lower opening 17 of the latter. The beverage thus obtained and collected in the container 11 cannot return to the duct 5 because the pores or the slot of the membrane element 23 close as soon as the upstream pressure returns below the limit pressure. The user can then pour the beverage into a glass through the dispensing outlet 14, or enjoy it directly from the container 11.

An advantage of the present invention is that it provides a device 1 for preparing coffee or other beverages in which the water W is able to pass through the duct 5, extract the aroma from the essence E and reach the container 11 as a beverage even at a temperature lower than the minimum operating temperature of the known moka pot and closer to or equal to the optimal extraction temperature: in fact, the pressure (and consequently the temperature) necessary to make the water W rise up the duct 5 to the bottom 13 of the container 11 is lower than the pressure (and temperature) necessary to make the water rise up the longer duct provided with a chimney of the known moka pot. The protrusion 8 provides, among others, the advantage of minimizing discontinuities, edge effects and resistances to the flow of water W, thus helping to further reduce the pressure required for water W to enter the duct 5 through the draft end 6.

Another advantage of the device 1 consists in the fact that the beverage that reaches the container 11 remains almost thermally insulated from the heat upstream, i.e. in the tank 3 and in the duct 5, thanks to the insulating effect intrinsically provided by the silicone or rubber material of the membrane element 23. In this way the prepared beverage, during its stay in the container 11, does not undergo any further overheating that could affect its organoleptic properties.

## Claims

1. Device for preparing coffee or other beverages comprising:
- a tank (3) for at least a predetermined quantity of water (W) having an upper opening (4);
- a duct (5) for the water (W), having a draft end (6) and having at an opposite end a permeable container element (7) assigned to house an essence (E) for the beverage;
- a container (11) for the beverage having a bottom (13) reversibly constrained to the tank (3);
in an assembled condition (Z) of the device (1), the draft end (6) of the duct (5) draws into the tank (3), the container element (7) engages the upper opening (4), and the container (11) is constrained to the tank (3); the bottom (13) of the container (11) has a lower opening (17) which in the assembled condition (Z) faces the container element (7) from above and places the container (11) in flow communication with the container element (7) by interposing a valve element (20) assigned to allow a flow of the beverage only in the direction from the container element (7) to the container (11); the device (1) being **characterised in that** the valve element (20) comprises a lower cap (21) and an upper cap (22) of the filter type, delimited by respective perimeter edges, and with a membrane element (23) with unidirectional flow interposed between them.

2. Device according to claim 1 **characterized in that** the membrane element (23) is made of elastic material and is provided with a plurality of holes with a cusp profile oriented towards the upper cap (22) and normally closed, said holes being elastically openable due to pressures in the container element (7) greater than a predetermined limit pressure.

3. Device according to claim 1 **characterized in that** the membrane element (23) is made of elastic material and has a convex portion provided with at least one slot, where normally the convexity of the convex portion is oriented towards the lower cap (21) and the at least one slot is closed; due to pressures in the container element (7) greater than a predetermined limit pressure, the membrane element (23) reversibly inverts its convexity and the at least one slot opens elastically.

4. Device according to any of the preceding claims **characterized in that** the membrane element (23) has a disc shape whose perimeter is clamped between the perimeter edges of the lower cap (21) and the upper cap (22) in correspondence with a circular edge (24) of the valve element (20).

5. Device according to claim 4 **characterized in that** the valve element (20) is of the disassemblable and reassemblable type, or **in that** the lower cap (21) and the upper cap (22) are mutually irreversibly constrained at the circular edge (24).

6. Device according to claim 4 or 5 **characterized in that** the circular edge (24) of the valve element (20) is reversibly lockable in a seat (18) obtained in proximity to or in correspondence with the lower opening (17) of the container (11).

7. Device according to claim 6 **characterized in that** it comprises a gasket (25) which in the assembled condition (Z) is fluid-tight associated with the circular edge (24) of the valve element (20).

8. Device according to any one of the preceding claims **characterized in that** the tank (3) and the container (11) have corresponding coupling means (31, 32) at the upper opening (4) and at the lower opening (17), respectively, for the reversible mutual constraint in the assembled condition (Z).

9. Device according to any one of the preceding claims **characterized in that** a base (9) of the tank (3) has a protrusion (8) which in the assembled condition (Z) is aligned with the draft end (6) of the duct (5).
